# EUROPÄISCHE PATENTANMELDUNG

(11) **EP 1 286 135 A2**
(43) Veröffentlichungstag der Anmeldung: **26.02.2003**
(21) Anmeldenummer: 02014404.4
(22) Anmeldetag: 28.06.2002
(51) Int. Cl.: G01C 11/10, G01C 11/28

(54) **Verfahren zur Bereitstellung positionssensitiver Informationen zu einem Objekt**

(30) Priorität: 23.08.2001 DE 10140393
(71) Anmelder: Technische Universität Clausthal, 38678 Clausthal-Zellerfeld (DE)
(72) Erfinder: Elzer, Peter F., Prof. Dr.-Ing., 38640 Goslar (DE); Behnke, Ralf, M. Sc., 61191 Rossbach (DE); Simon, Arno, 38678 Clausthal-Zellerfeld (DE)
(74) Vertreter: Patentanwälte Thömen & Körner

(57) **Zusammenfassung**

Es wird ein Verfahren zur Bereitstellung positionssensitiver Informationen zu einem Objekt beschrieben.

Dies geschieht durch Bestimmung einer Betrachtungsposition und Betrachtungsrichtung bezogen auf das Objekt sowie Selektion der für diese Betrachtungsposition und Betrachtungsrichtung relevanten Informationen aus einer Informationsdatenbank und Darstellung dieser Informationen Dabei wird die Betrachtungsposition und Betrachtungsrichtung durch eine Lernphase und eine Erkennungsphase vorgenommen.

## Beschreibung

Die Erfindung betrifft ein Verfahren zur Bereitstellung positionssensitiver Informationen zu einem Objekt nach dem Oberbegriff des Anspruchs 1.

Bei der Wartung und Reparatur von Objekten, beispielsweise Werkzeugmaschinen, wurden bisher Handbücher zu Rate gezogen und entsprechend der in den Handbüchern enthaltenen Anweisungen die Wartungs- und Reparaturarbeiten durchgeführt. Dazu musste das Personal die nötigen Informationen im Handbuch nachschlagen und die Anweisungen dann am Objekt umsetzen. Neben dem hohen Zeitaufwand sind dabei auch die Umgebungsbedingungen, wie Temperatur, Feuchtigkeit, Verschmutzung bei der Handhabung der Informationsunterlagen hinderlich. Außerdem stört die Notwendigkeit der häufigen Blickrichungsänderung den Arbeitsvorgang erheblich.

Wünschenswert wäre es, wenn dem zuständigen Personal die nötigen Informationen zu dem Objekt akustisch oder optisch vermittelt werden können und zwar in Abhängigkeit von der jeweiligen Betrachtungsposition. Dies könnte akustisch durch Lautsprecher oder Kopfhörer und optisch durch einen separaten Bildschirm oder durch ein am Körper, z. B. als Brille getragenes Anzeigegerät erfolgen, in das die nötigen Informationen eingeblendet werden.

Zur Ermittlung der jeweiligen Position, aus der das Objekt aktuell betrachtet wird, wird bisher üblicherweise ein Ortungssystem, bestehend aus einem fest im Raum platzierten Sender und einem vom Betrachter getragenen Empfänger eingesetzt und der räumliche Bezug zum Objekt dann mittels elektromagnetischer, akustischer, wie Ultraschall, oder optischer Winkel- und Entfernungsmessung bestimmt. Dies erfordert jedoch zusätzlich die Bereitstellung eines geeigneten Ortungssystems. Nachteilig ist dabei auch, dass die Genauigkeit des Ortungssystems durch elektromagnetische, akustische bzw. optische Störfelder beeinträchtigt werden kann.

Der Erfindung liegt die Aufgabe zugrunde, die Vorgehensweise bei der Bereitstellung positionssensitiver Informationen zu einem Objekt dahingehend zu verbessern, dass die Betrachtungsposition und die Betrachtungsrichtung zur Auswahl der relevanten Informationen aus einer Informationsdatenbank allein aus den optisch erfassbaren Merkmalen des Objektes selbst ermittelt werden kann.

Diese Aufgabe wird bei einem Verfahren nach dem Oberbegriff des Anspruchs 1 durch die Merkmale dieses Anspruchs gelöst.

Erfindungsgemäß wird dabei die Betrachtungsposition und die Betrachtungsrichtung durch eine Lernphase und eine Erkennungsphase ermittelt. Die Lernphase muss in der Regel. lediglich einmalig durchgeführt werden, da die ermittelten Datensätze ihre Gültigkeit behalten, solange das Objekt nicht verändert wird. In der Erkennungsphase erfolgt dann fortlaufend die Ermittlung der jeweils aktuellen Betrachtungsposition und des Betrachtungswinkels.

In der Lernphase wird in einem ersten Schritt eine endliche Zahl von Bildern des Objekts aus unterschiedlichen Winkeln erfasst. Die Anzahl der Bilder richtet sich dabei nach dem für die spätere Erkennung relevanten Betrachtungssektor und der erforderlichen Genauigkeit zur Bestimmung der Betrachtungsposition und Betrachtungsrichtung.

In einem zweiten Schritt werden durch eine Vorverarbeitung die für eine Erkennung charakteristischen Merkmale der erfassten Bilder extrahiert. Diese Maßnahme dient dazu, die Daten der aus den einzelnen Bildern erhaltenen Merkmalssätze im Interesse einer schnellen Bearbeitung durch die zur Verfügung stehende Rechnerleistung bei der späteren Erkennung zu reduzieren und die Erkennungssicherheit nicht durch unnötige Details zu beeinträchtigen.

Die Merkmalssätze werden dann in einem dritten Schritt in einer Datenbank gespeichert.

In der Erkennungsphase wird in einem ersten Schritt das Objekt aus einer zunächst unbekannten Betrachtungsposition mittels eines Sensors erfasst. Danach werden in einem zweiten Schritt charakteristische Merkmale des Bildes des Objektes selektiert. Die Vorgehensweise in der Erkennungsphase beim ersten und zweiten Schritt ähnelt der Vorgehensweise in der Lernphase beim ersten und zweiten Schritt.

Anschließend wird in einem dritten. Schritt der Grad der Ähnlichkeit zwischen den in der Erkennungsphase extrahierten charakteristischen Merkmalen mit den gespeicherten charakteristischen Merkmalen ermittelt. Die Datensätze mit der größten Ähnlichkeit, denen aus der Lernphase bekannte Betrachtungspositionen und Betrachtungswinkel zugeordnet sind, grenzen dann einen Bereich ein, in dem sich der Betrachter unter einer Betrachtungsposition mit hoher Wahrscheinlichkeit befindet.

Schließlich werden dann in einem vierten Schritt aus dem Grad der Ähnlichkeit die Betrachtungsposition und der Betrachtungswinkel bezogen auf das Objekt ermittelt. Durch ein geeignetes Berechnungsverfahren werden auch Zwischenpositionen ermittelt, für die keine Bilder aufgenommen wurden.

Eine softwaretechnische Rastervergröberung der erfassten Bilder kann zur Leistungssteigerung gegebenenfalls durch einen geeigneten Aufbau des Sensors von diesem übernommen werden. Bei diesem Verfahren werden die Bildpunkte der einzelnen Rasterelemente bereits bei der Erfassung aufsummiert und zur direkten Weiterverarbeitung an das System übergeben.

Für eine praktische Durchführung des Verfahrens ist nach einer ersten Alternative ein neuronales Netz und nach einer zweiten Alternative ein tabellengesteuertes Bilderkennungsverfahren geeignet.

Bei Einsatz eines neuronalen Netzes wird in der Lernphase im zweiten Schritt eine Vorverarbeitung durch eine Rastervergröberung der erfassten Bilder und eine Digitalisierung durch Zuordnung von gemittelten Intensitäten zu Elementen der grob gerasterten Bilder vorgenommen.

Hierdurch wird eine Datenreduktion erzielt, die einmal bei vorgegebener Rechenleistung die Datenverarbeitung beschleunigt und außerdem die Gefahr von Fehlinterpretationen bei der Verarbeitung über das neuronale Netz vermindert, wenn in einem vierten Schritt das neuronale Netz mit den selektierten charakteristischen Merkmalen angelernt wird.

Der zweite Schritt der Erkennungsphase ähnelt dem zweiten Schritt der Lernphase.

Im dritten Schritt der Erkennungsphase wird schließlich unter Ausnutzung der Eigenschaften des neuronalen Netzes der Grad der Ähnlichkeit mit den nächstliegenden, in der Lernphase gespeicherten Bildern der Lernphase ermittelt.

Bei Anwendung eines tabellengesteuerten Bilderkennungsverfahrens wird in der Lernphase im zweiten Schritt die Vorverarbeitung durch ein klassisches Bildverarbeitungsverfahren vorgenommen, bei dem für dieses Bildverarbeitungsverfahren geeignete Bildmerkmale herauspräpariert werden. Auch diese Maßnahme dient dazu, bei gegebener Rechnerleistung die Verarbeitungsgeschwindigkeit zu erhöhen.

Ebenfalls wird in der Erkennungsphase im zweiten Schritt die Vorverarbeitung durch ein klassisches Bildverarbeitungsverfahren vorgenommen, bei dem für dieses Bildverarbeitungsverfahren geeignete Bildmerkmale herauspräpariert werden. Dieser Schritt ähnelt dem zweiten Schritt der Lernphase. Der Vorteil besteht darin, dass für die Erkennungsphase gleiche Kriterien wie für die Lernphase angewendet werden und damit die Vergleichbarkeit verbessert wird.

Im dritten Schritt wird mit Hilfe eines strukturierten Vergleichs der ermittelten und gespeicherten Merkmalssätze der Grad der Ähnlichkeit mit den nächstliegenden Bildern der Lernphase ermittelt. Der strukturierte Vergleich ermöglicht hierbei, bei gegebener Rechnerleistung die Zahl der erforderlichen Vergleichsschritte zu reduzieren und somit die Verarbeitungsgeschwindigkeit zu erhöhen.

Ergänzend kann bei beiden Verfahren in den Erkennungsphasen nach dem dritten Schritt die Genauigkeit der Betrachtungsposition und Betrachtungsrichtung noch durch ein in einem fünften Schritt durchgeführtes Nachbearbeitungsverfahren erhöht werden. Bei diesem Nachbearbeitungsverfahren werden die Betrachtungspositionen und Betrachtungsrichtungen mit der höchsten Wahrscheinlichkeit miteinander verknüpft und so eine Betrachtungsposition und Betrachtungsrichtung ermittelt, die den tatsächlichen Werten am nächsten kommen.

Das Nachbearbeitungsverfahren kann dabei ein Interpolationsverfahren oder Extrapolationsverfahren mit entsprechender Gewichtung der Wahrscheinlichkeiten sein.

Vorzugsweise werden die Bilder in der Lernphase und der Erkennungsphase mit optischen Sensoren, wie Videokameras, Rastersensoren erfasst. Durch die Verwendung handelsüblicher Geräte kann der Aufwand verringert werden.

Bei Durchführung des Verfahrens mit einem neuronalen Netz wird zweckmäßig durch vorangehende Erfahrungen oder empirische Methoden ein geeignetes neuronales Netz aus einer Anzahl bekannter neuronaler Netze ausgewählt und eingesetzt. Hierdurch wird eine für diesen Anwendungsfall mögliche Optimierung in der Verarbeitungsgeschwindigkeit und -genauigkeit erzielt.

Nachfolgend wird das Verfahren anhand eines Ausführungsbeispiels dargestellt, das durch Zeichnungen erläutert ist.

In der Zeichnung zeigen:
- Fig. 1: eine auf eine Ebene reduzierte schematische Darstellung der Lernphase,
- Fig. 2: eine auf eine Ebene reduzierte schematische Darstellung der Erkennungsphase und
- Fig. 3: eine im Ausführungsbeispiel realisierte räumliche Positionserkennung.

Die Figuren sind stark vereinfacht, um ihre Übersichtlichkeit zu verbessern.

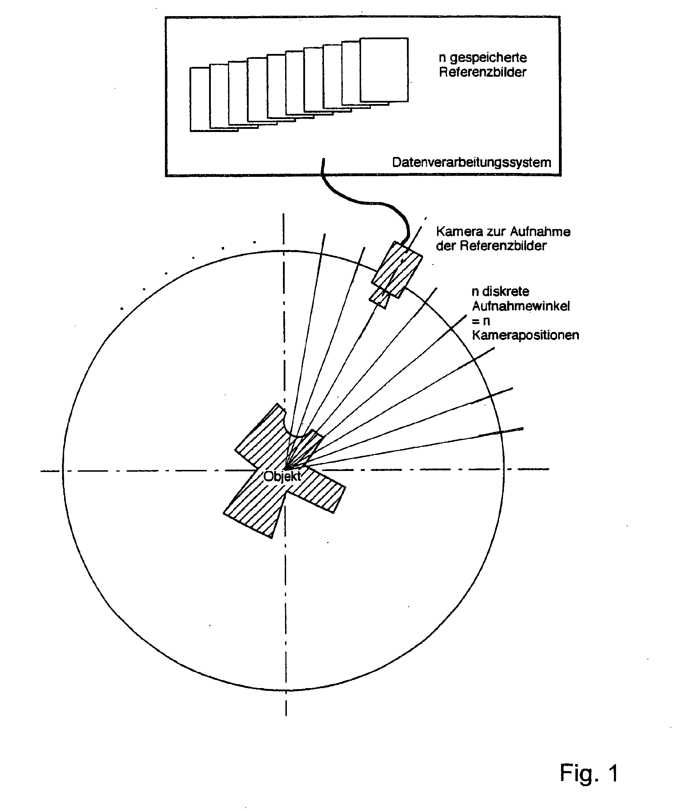

In Fig. 1 ist im Zentrum eines Referenzkreises ein Objekt angeordnet, dessen geometrische Merkmale erfasst werden sollen. Auf dem Referenzkreis befindet sich eine Kamera zur Aufnahme der Referenzbilder. Die optische Achse der Kamera ist auf das Zentrum des Kreises gerichtet und erfasst Bilder des Objektes. Der Kreis ist in n diskrete Aufnahmewinkel unterteilt, die n Kamerapositionen entsprechen. Aus diesen Kamerapositionen werden Einzelbilder aufgenommen und einem Datenverarbeitungssystem zugeführt. Die Datenverarbeitung erfolgt in dem Sinne, dass zunächst eine Datenreduktion in Form von Selektierung und Zusammenfassung charakteristischer Merkmale zu Merkmalssätzen durchgeführt und diese Merkmalssätze der Einzelbilder gespeichert werden. Bei Verwendung eines neuronalen Netzes wird gleichzeitig das neuronale Netz angelernt.

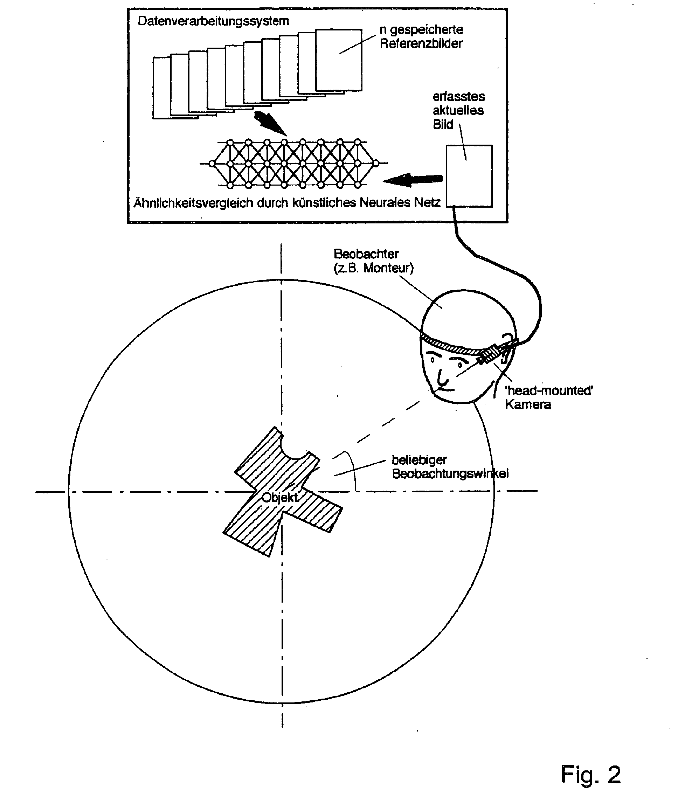

Fig. 2 zeigt eine schematische Darstellung der Erkennungsphase. Das gleiche Objekt aus Fig. 1 befindet sich nun im Blickfeld eines Beobachters, z. B. eines Monteurs. Der Beobachter trägt eine auf dem Kopf montierte Kamera, deren optische Achse in die Blickrichtung des Beobachters weist.

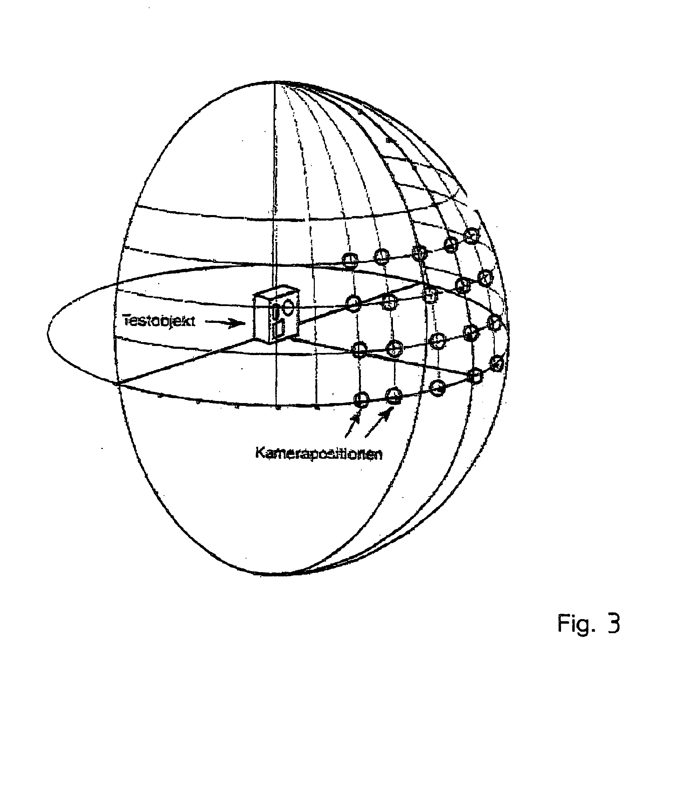

Fig. 3 eine im Ausführungsbeispiel realisierte räumliche Positionserkennung. Das Objekt ist wiederum im Zentrum angeordnet, während eine Mehrzahl Kamerapositionen sphärisch angedeutet sind.

Aus einem beliebigen Betrachtungswinkel wird ein Bild des Objektes von der Kamera erfasst und einem Datenverarbeitungssystem zugeführt. Hier wird zunächst ebenfalls eine Datenreduktion vorgenommen, die vorzugsweise der Datenreduktion in der Lernphase entspricht. Mittels der n gespeicherten Referenzbilder wird das erfasste aktuelle Bild einem Ähnlichkeitsvergleich durch ein neuronales Netz unterzogen. Unter der Annahme, dass sich die Kamera auf demselben Radius befindet, unter dem auch die Referenzbilder aufgenommen wurden, ergeben sich dann Ähnlichkeiten mit einem oder zwei gespeicherten Referenzbildern. Aus der bekannten Position, aus der die Referenzbilder aufgenommen wurden, kann auf den Betrachtungswinkel bei der Erkennungsphase geschlossen werden. Stimmt der Betrachtungswinkel exakt mit dem Winkel überein, in dem eines der n Referenzbilder aufgenommen wurde, so entspricht auch der Winkel des erfassten aktuellen Bildes diesem Betrachtungswinkel. In anderen Fällen muss in Abhängigkeit des Ähnlichkeitsgrades eine Zwischenposition ermittelt werden.

Eine Erkennung ist auch möglich, wenn der Beobachter einen von der Lernphase abweichenden Abstand zum Objekt einnimmt. In diesem Fall kann der Abstand durch das Verfahren automatisch bestimmt und über einen Skalierungsfaktor ermittelt werden.

In Abhängigkeit der aktuellen Betrachtungsposition und des Betrachtungswinkels können aus einer Datenbank nun relevante Hinweise und/oder Anweisungen visuell und/oder akustisch gegeben werden. Bei der visuellen Darstellung lassen sich Symbole oder schriftliche Anweisungen im Klartext generieren.

Die Anweisungen können auch darin bestehen, die Blickrichtung zu verändern, wenn ein zu bearbeitender Bereich des Objektes nicht oder unvollständig im Sichtfeld des Betrachters liegt, um die Erkennungssicherheit zu verbessern.

Es sind noch eine Reihe weiterer Hilfsinformationen denkbar, wie Statusmeldungen, die aus der Stellung einzelner Bedienungselemente abgeleitet werden. Ebenso lassen sich Veränderungen des Objektes darstellen.

Bei Wartungsarbeiten ergibt sich zudem die Möglichkeit, auch Ersatzteile und deren vorzunehmende Einbaupositionen zu erfassen.

## Patentansprüche

1. Verfahren zur Bereitstellung positionssensitiver Informationen zu einem Objekt durch Bestimmung einer Betrachtungsposition und Betrachtungsrichtung bezogen auf das Objekt sowie Selektion der für diese Betrachtungsposition und Betrachtungsrichtung relevanten Informationen aus einer Informationsdatenbank und Darstellung dieser Informationen, wobei die Betrachtungsposition und Betrachtungsrichtung durch eine Lernphase und eine Erkennungsphase mit nachfolgenden Merkmalen vorgenommen wird:
in der Lernphase werden
a) in einem ersten Schritt eine endliche Zahl von Bildern des Objekts aus unterschiedlichen Winkeln erfasst,
b) in einem zweiten Schritt durch eine Vorverarbeitung die für eine Erkennung charakteristischen Merkmale der erfassten Bilder selektiert,
c) in einem dritten Schritt die selektierten charakteristischen Merkmale in einer Datenbank gespeichert;
in der Erkennungsphase werden
a) in einem ersten Schritt das Objekt aus einer zunächst unbekannten Betrachtungsposition mittels eines Sensors erfasst,
b) in einem zweiten Schritt charakteristische Merkmale des Bildes des Objekts selektiert,
c) in einem dritten Schritt eine Ähnlichkeit und der Grad der Ähnlichkeit zwischen den in der Erkennungsphase selektierten charakteristischen Merkmalen mit den gespeicherten charakteristischen Merkmalen ermittelt,
d) aus dem Grad der Ähnlichkeit die Betrachtungsposition und Betrachtungsrichtung bezogen auf das Objekt ermittelt.

2. Verfahren nach Anspruch 1, **dadurch gekennzeichnet, dass** zur Erkennung durch ein neuronales Netz
in der Lernphase
a) im zweiten Schritt die Vorverarbeitung durch eine Rastervergröberung der erfassten Bilder und eine Digitalisierung durch Zuordnung von gemittelten Intensitäten zu Elementen der grob gerasterten Bilder vorgenommen wird,
b) in einem vierten Schritt das neuronale Netz mit den selektierten charakteristischen Merkmalen angelernt wird;
in der Erkennungsphase
a) im zweiten Schritt die Vorverarbeitung durch eine Rastervergröberung der erfassten Bilder und eine Digitalisierung durch Zuordnung von geeignet aufbereiteten Intensitäten zu Elementen der grob gerasterten Bilder vorgenommen wird,
b) im dritten Schritt der Grad der Ähnlichkeit mit den nächstliegenden Bildern der Lernphase ermittelt wird.

3. Verfahren nach Anspruch 1, **dadurch gekennzeichnet, dass** zur Erkennung durch ein tabellengesteuertes Bilderkennungsverfahren
in der Lernphase
a) im zweiten Schritt die Vorverarbeitung durch ein klassisches Bildverarbeitungsverfahren vorgenommen wird, bei dem für dieses Bildverarbeitungsverfahren geeignete Bildmerkmale herauspräpariert werden;
in der Erkennungsphase
a) im zweiten Schritt die Vorverarbeitung durch ein klassisches Bildverarbeitungsverfahren vorgenommen wird, bei dem für dieses Bildverarbeitungsverfahren geeignete Bildmerkmale herauspräpariert werden,
b) im dritten Schritt mit Hilfe eines strukturierten Vergleichs der ermittelten und gespeicherten Merkmalssätze der Grad der Ähnlichkeit mit den nächstliegenden Bildern der Lernphase ermittelt wird.

4. Verfahren nach einem der Ansprüche 1 bis 3, **dadurch gekennzeichnet, dass** bei der Erkennung nach dem dritten Schritt, die Genauigkeit der Betrachtungsposition und Betrachtungsrichtung noch durch ein in einem vierten Schritt durchgeführtes Nachbearbeitungsverfahren erhöht wird.

5. Verfahren nach Anspruch 4, **dadurch gekennzeichnet, dass** das Nachbearbeitungsverfahren ein Interpolationsverfahren oder Extrapolationsverfahren ist.

6. Verfahren nach einem der Ansprüche 1 bis 5, **dadurch gekennzeichnet, dass** die Bilder in der Lernphase und der Erkennungsphase mit optischen Sensoren, wie Videokameras, Rastersensoren, erfasst werden.

7. Verfahren nach einem der Ansprüche 2, 4 bis 6, **dadurch gekennzeichnet, dass** durch vorangehende Erfahrungen oder empirische Methoden ein geeignetes neuronales Netz aus einer Anzahl bekannter neuronaler Netze ausgewählt und eingesetzt wird.
